# EUROPÄISCHE PATENTSCHRIFT

(11) **EP 0 370 494 B1**
(45) Veröffentlichungstag und Bekanntmachung des Hinweises auf die Patenterteilung: **14.01.1998**
(21) Anmeldenummer: 89121583.2
(22) Anmeldetag: 22.11.1989
(51) Int. Cl.: B23C 5/22

(54) **Wendeschneidplatte**
Indexable cutting insert
Plaquette de coupe indexable

(30) Priorität: 25.11.1988 DE 3839804
(43) Veröffentlichungstag der Anmeldung: 30.05.1990
(73) Patentinhaber: Widia GmbH, 45145 Essen (DE)
(72) Erfinder: Heinlein, Manfred, 8502 Zirndorf (DE)
(74) Vertreter: Schieferdecker, Lutz, Dipl.-Ing.

(56) Entgegenhaltungen:
- EP-A- 0 035 848
- EP-A- 0 334 129
- GB-A- 1 177 699

## Beschreibung

Die Erfindung betrifft eine Wendeschneidplatte für einen Schlichtmesserkopf entsprechend den Merkmalen des Oberbegriffes des Anspruches 1.

Wendeschneidplatten der hier interessierenden Art weisen wahlweise als Auflagefläche bzw. als Freifläche benutzbare Flächen sowie wahlweise als Anlagefläche bzw. als Spanfläche benutzbare Flächen und ferner Schneidkanten an einem Grundkörper auf, wobei in Umfangsrichtung jeweils benachbarte Schneidkanten in verschiedenen Ebenen angeordnet sind.

Eine derartige Wendeschneidplatte ist aus der US 4 182 587 bekannt. Der Grundkörper ist polygonförmig und ist mit in zwei Hauptebenen einander gegenüberliegenden Schneidkanten versehen.

Ferner ist aus der EP 0 035 848 A3 eine weitere Wendeschneidplatte mit mehreren Schneidkanten in einer bzw. in zwei Hauptebenen bekannt. Die Schneidkanten sind leicht bogenförmig geschliffen und die Ecken dieser bekannten Wendeschneidplatte sind stark abgerundet. Hierdurch soll beim Bearbeiten eines Werkstückes eine möglichst glatte Oberfläche entstehen.

Der Erfindung liegt die Aufgabe zugrunde, eine Wendeschneidplatte der eingangs genannten Art so zu gestalten, daß sie ebenfalls besonders glatte, rillen- und riefenfreie Oberflächen erzeugt und sich leicht und unproblematisch in den Schlichtmesserkopf einbauen läßt.

Gelöst wird diese Aufgabe mit den Merkmalen des Anspruches 1.

Die Schneidkanten der erfindungsgemäßen Wendeschneidplatte sind ebenfalls bogenförmig, wobei jedoch ihr Krümmungsradius im Verhältnis zur Schneidkantenlänge so groß ist, daß die Schneidkanten je annähernd als Geraden erscheinen. Erreicht wird der Krümmungsradius dadurch, daß die schneidkantennahen Ränder leicht ballig sind. Ferner sind Fasen derart vorgesehen, daß die Enden der jeweils dort auslaufenden Schneidkanten abgeschrägt sind. Geschaffen wurde hierdurch eine Wendeschneidplatte, mit der sich glatte Oberflächen mit bester Qualität herstellen lassen.

Weiterbildungen und besondere Ausgestaltungen der Erfindung sowie Vorteile gehen aus Unteranspruchen und der Beschreibung sowie der Zeichnung hervor.

Die Erfindung wird nachstehend anhand von Ausführungsbeispielen, die in der Zeichnung dargestellt sind, näher beschrieben. Dabei zeigen:
- Fig. 1:: eine Draufsicht auf die Wendeschneidplatte;
- Fig. 2:: eine Seitenansicht in Richtung des Pfeiles A in Fig. 1;
- Fig. 3:: eine Seitenansicht in Richtung des Pfeiles B in Fig. 1;
- Fig. 4:: eine Draufsicht auf die Wendeschneidplatte gekippt um den Anlagewinkel:
- Fig. 5:: eine perspektivische Ansicht der Wendeschneidplatte gemäß den Figuren 1-4 in größerem Maßstab;
- Fig. 6:: ein Einbaubeispiel mit einer abgewandelten Wendeschneidplatte in Draufsicht;
- Fig. 7:: einen Schnitt längs der Linie VII/VII in Fig. 6;
- Fig. 8:: das Einbauspiel in Seitenansicht und
- Fig. 9:: eine Draufsicht auf eine weitere Ausführungsform der Wendeschneidplatte.

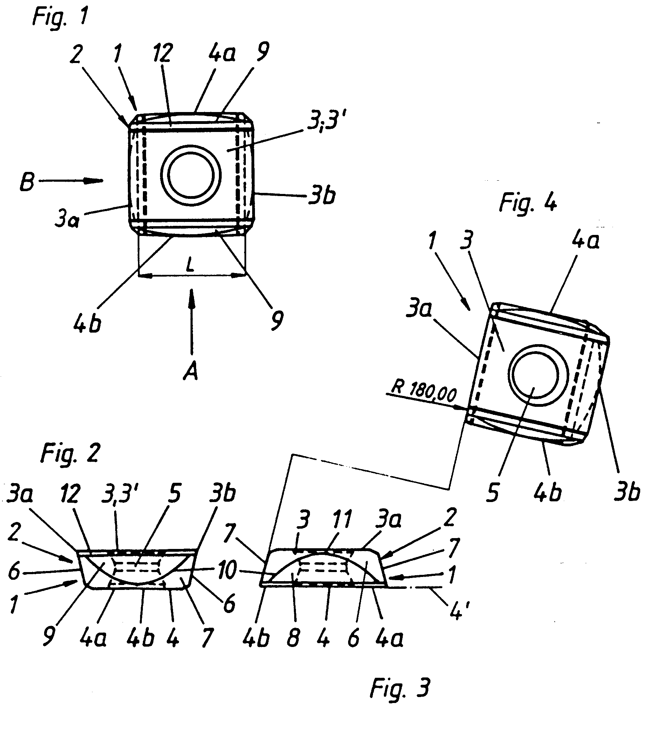

Eine Wendeschneidplatte 1 gemäß dem in den Figuren 1 bis 5 dargestellten Ausführungsbeispiel besteht aus einem Grundkörper 2 und weist zwei parallele, wahlweise als Auflageflächen bzw. als Freiflächen benutzbare Flächen 3, 4 auf. Schneidkanten 3a und 3b bzw. 4a und 4b befinden sich jeweils in den Ebenen 3' und 4' der beiden Flächen 3 und 4. Die Schneidkanten 3a und 3b bzw. 4a und 4b sind sehr schwach gekrümmt. Ihr Krümmungsradius ist wesentlich größer als die Schneidkantenlänge L (Fig. 1) und liegt beispielsweise in der Größenordnung eines 12-fachen der Schneidkantenlänge L (z.B. L = 15; R = 180). Die Krümmung der Schneidkanten 3a, 3b und 4a, 4b ist daher auch in den Figuren nicht dargestellt und erscheint nur als Gerade.

Die Wendeschneidplatte 1 weist ferner eine Befestigungsöffnung 5 auf. Bezogen auf diese Befestigungsöffnung 5 liegen jeweils zwei Schneidkanten 3a und 3b bzw. 4a und 4b einander gegenüber.

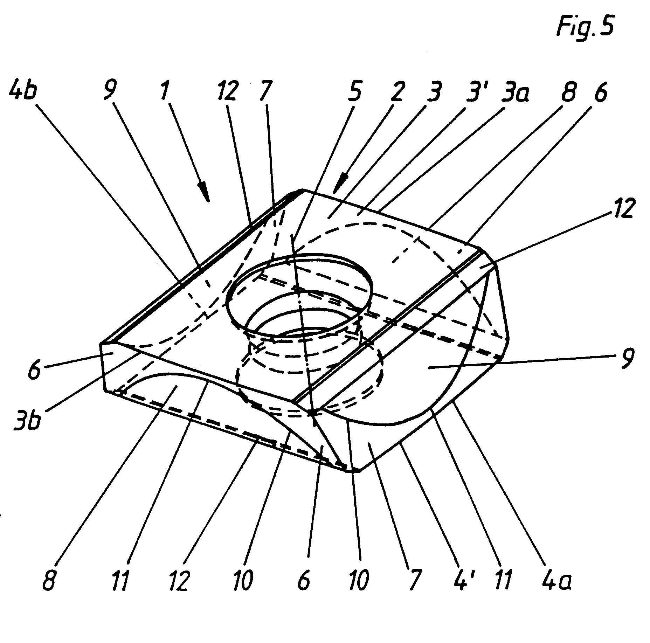

Zur Erzielung der Krümmung der Schneidkanten 3a und 3b bzw. 4a und 4b sind bei dem in den Figuren 1 bis 5 dargestellten Ausführungsbeispiel die als Anlageflächen bzw. als Spanflächen dienenden Flächen 8 und 9 im Bereich ihrer jeweils schneidkantennahen Ränder 6, 7 geringfügig gewölbt. Die schneidkantennahen Ränder 6, 7 sind konvex ballig gekrümmt und bilden gewölbte Schneidenfreiflächen. Diese Schneidenfreiflächen sind ballige Teile der als Anlage- und als Spanflächen dienenden, ebenen Flächen 8 und 9. Die Kontur 10 der ebenen Flächen 8, 9 ist parabel- oder hyperbelähnlich. Ihr Scheitel 10 ist der jeweiligen Schneidkante 3a, 3b bzw. 4a, 4b zugewandt. Benachbarte, schneidkantennahe Ränder 6, 7 und Flächen 8, 9 sind lagemäßig zueinander versetzt. So ist neben einer Fläche 8 mit gemäß Fig. 5 oben befindlichem Scheitel 11 eine Fläche 9 mit unten befindlichem Scheitel 11 entsprechend den benachbarten und zu zwei verschiedenen Ebenen 3' und 4' gehörenden Schneidkanten 3a, 3b und 4a, 4b angeordnet.

In Umfangsrichtung der Wendeschneidplatte 1 liegen somit benachbarte Schneidkanten 3a, 4a bzw. 3b, 4b jeweils in verschiedenen Ebenen 3' bzw. 4' und ferner in den Ebenen 3' und 4' der beiden zueinander parallelen, als Auflageflächen bzw. als Freiflächen dienenden Flächen 3, 4.

Wie aus den Figuren 1 bis 4 schließlich noch hervorgeht, sind jeweils auch die benachbarten schneidkantennahen Ränder 6 und 7 und die zugehörigen Flächen 8 und 9 zu den beiden parallelen Flächen 3 und 4 entgegengesetzt geneigt. Es divergieren jeweils die schneidkantennahen Ränder 6 mit den zu ihnen gehörenden ebenen Flächen 8 von der Fläche 4 zur Fläche 3 und es divergieren die schneidkantennahen Ränder 7 mit ihren Flächen 9 von der Fläche 3 zur Fläche 4. Die zugehörigen Grundlinien an den Flächen 3 und 4 sind somit immer länger als die Schneidkanten 3a, 3b bzw. 4a, 4b.

Die Flächen 8 und 9 weisen gegenüber ihrem Scheitel 11 jeweils Fasen zum Übergang in die Flächen 3 und 4 auf. Durch diese Fasen 12 sind die Enden der jeweils dort auslaufenden Schneidkanten 3a, 3b bzw. 4a, 4b abgeschrägt.

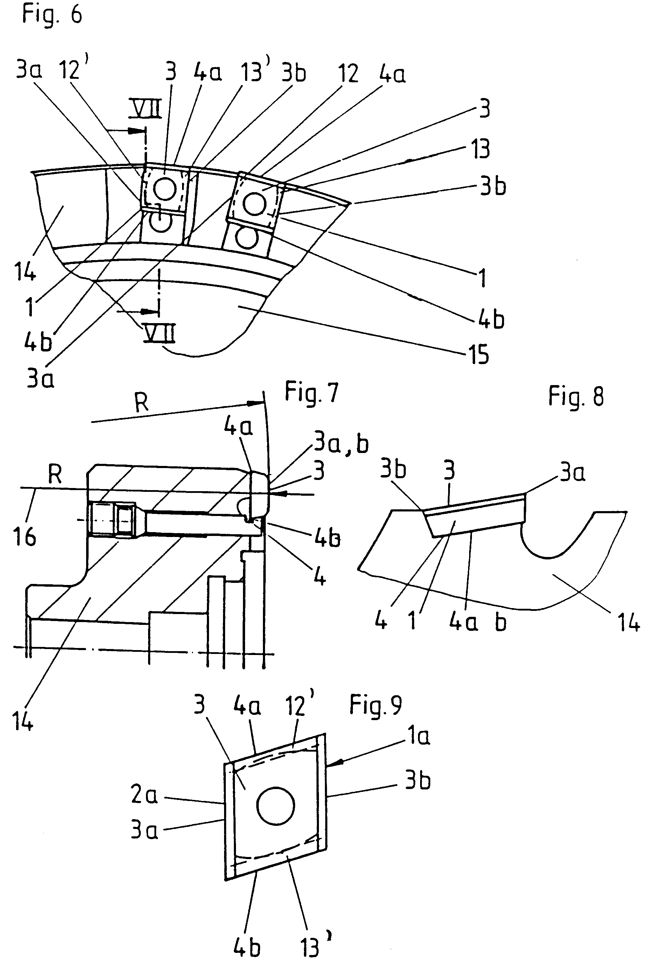

Um im Bereich der schneidkantennahen Ränder 6, 7 der Flächen 8, 9 eine ausreichend konvexe Krümmung bzw. Balligkeit zu erreichen, darf der Radius R (Fig. 4) nicht zu groß, aber auch nicht zu klein sein. Die Größe dieses Radius R hängt von den jeweiligen Anforderungen ab und wird für jeden Einzelfall bestimmt. Die Krümmung der Schneidkanten 3a, 3b bzw. 4a, 4b kann aber auch dadurch erzielt werden, daß der schneidkantennahe Rand 12' bzw. 13' der als Auflagefläche bzw. als Freifläche dienenden Flächen 3, 4 leicht gewölbt ist, wie dies bei dem in Fig. 6 dargestellten Ausführungsbeispiel der Fall ist.

Fig. 6 zeigt Wendeschneidplatten 1 nach dem Einbau in einen Schlichtmesserkopf 14, der zum Planfräsen dient. Die Schneidkanten liegen dabei in einer Stirnfläche 15 des Schlichtmesserkopfes 14.

Die Fig. 7 zeigt eine Einzelheit des Schlichtmesserkopfes 14 im Schnitt sowie die Lage des Radius R, der zur Erzeugung der Krümmung der Schneidkanten 3a, 3b dient und dessen Mittelpunkt in einer Ebene 16 parallel zur Drehachse des Schlichtmesserkopfes 14 liegt.

Die Wendeschneidplatte 1 gemäß den Figuren 1 bis 5 bzw. gemäß den Figuren 6 bis 8 ist in Draufsicht gesehen, abgesehen von schräg stehenden Flächen 8, 9 im wesentlichen rechteckig. Nicht so ist dies bei dem in Fig. 9 dargestellten Ausführungsbeispiel einer Wendeschneidplatte 1a. Ihr Grundkörper 2a ist in Draufsicht trapezförmig. Im übrigen ist die Wendeschneidplatte 1a hinsichtlich ihrer technischen Einzelheiten identisch wie die Wendeschneidplatte 1 gemäß den Figuren 6 bis 8, d.h. der jeweils schneidkantennahe Rand 12', 13' der parallelen, als Freifläche bzw. als Auflagefläche dienenden Flächen 3, 4 ist leicht ballig, so daß auch die Schneidkanten 3a, 3b bzw. 4a, 4b geringfügig und in Fig. 9 nicht darstellbar gekrümmt sind.

## Patentansprüche

1. Wendeschneidplatte für einen Schlichtmesserkopf mit wahlweise als Auflagefläche bzw. als Freifläche benutzbaren Flächen (3, 4) sowie mit wahlweise als Anlagefläche bzw. als Spanfläche benutzbaren Flächen (8, 9) und mit Schneidkanten (3a, 3b bzw. 4a, 4b) an einem Grundkörper (2), wobei in Umfangsrichtung jeweils benachbarte Schneidkanten (3a, 4a bzw. 3b, 4b) in verschiedenen Ebenen (3' bzw. 4') angeordnet sind,
dadurch gekennzeichnet,
a) daß die Schneidkanten (3a, 3b; 4a, 4b) bogenförmig sind, wobei der Krümmungsradius (R) der Schneidkanten (3a, 3b; 4a, 4b) im Verhältnis zur Schneidkantenlänge L so groß ist, daß die Schneidkanten (3a, 3b; 4a, 4b) je annähernd als Geraden erscheinen,
b) daß schneidkantennahe Randflächen (6, 7 bzw. 12', 13') leicht ballig sind und
c) daß Fasen (12) vorgesehen sind, durch die die Enden der jeweils dort auslaufenden Schneidkanten (3a, 3b bzw. 4a, 4b) abgeschrägt sind.

2. Wendeschneidplatte nach Anspruch 1, dadurch gekennzeichnet, daß der schneidkantennahe Rand (6, 7) der als Anlagefläche bzw. als Spanfläche dienenden Fläche (8, 9) zur Erzielung der Krümmung der Schneidkante (3a, 3b bzw. 4a, 4b) gewölbt ist.

3. Wendeschneidplatte nach Anspruch 1, dadurch gekennzeichnet, daß der schneidkantennahe Rand (12 bzw. 13') der parallelen, als Freifläche bzw. als Auflagefläche dienenden Flächen (3, 4) leicht ballig ist.

4. Wendeschneidplatte nach mindestens einem der vorhergehenden Ansprüche, dadurch gekennzeichnet, daß der Grundkörper (2) in Draufsicht rechteckig ist.

5. Wendeschneidplatte nach mindestens einem der vorhergehenden Ansprüche, dadurch gekennzeichnet, daß der Grundkörper (2a) in Draufsicht trapezförmig ist.

6. Wendeschneidplatte nach mindestens einem der vorhergehenden Ansprüche, dadurch gekennzeichnet, daß eine ebene, als Anlage- bzw. als Spanfläche dienende Fläche (8, 9) innerhalb des gewölbten und als Schneidenfreifläche dienenden Randes (6, 7) einer jeden Schneidkante (3a, 4a bzw. 3b, 4b) zugeordnet ist.

7. Wendeschneidplatte nach mindestens einem der vorhergehenden Ansprüche, dadurch gekennzeichnet, daß in Umfangsrichtung benachbarte, als Anlage- bzw. als Spanflächen dienende Flächen (8, 9) mit ihren Scheiteln (11) lagemäßig zueinander versetzt sind.

8. Wendeschneidplatte nach mindestens einem der vorhergehenden Ansprüche, dadurch gekennzeichnet, daß zwei Schneidkanten (3a, 3b; 4a, 4b) pro Ebene (3', 4') vorgesehen sind.

9. Wendeschneidplatte nach mindestens einem der vorhergehenden Ansprüche, dadurch gekennzeichnet, daß jeweils benachbarte, als Schneidenfreiflächen dienende, schneidkantennahe Ränder (6, 7) und die zugehörigen, als Anlage- bzw. als Spanflächen dienenden Flächen (8, 9) zu den beiden parallelen, als Auflage- bzw. als Freifläche dienenden Flächen (3, 4) entgegengesetzt geneigt sind.

10. Wendeschneidplatte nach mindestens einem der vorhergehenden Ansprüche, dadurch gekennzeichnet, daß die Flächen (8, 9) eine parabel- bzw. hyperbelähnliche Kontur (10) besitzen und daß der Scheitel (11) der Kontur (10) der jeweiligen Schneidkante (3a, 3b; 4a, 4b) zugewandt ist.

11. Fräswerkzeug mit Wendeschneidplatten mit den Merkmalen eines der vorhergehenden Ansprüche, dadurch gekennzeichnet, daß die Wendeschneidplatten (1) in einem zum Planfräsen dienenden Schlichtmesserkopf (14) derart angeordnet sind, daß die Schneidkanten (3a, 3b bzw. 4a, 4b) in einer Stirnfläche (15) des Schlichtmesserkopfes (14) liegen.

12. Fräswerkzeug nach Anspruch 11, dadurch gekennzeichnet, daß der Mittelpunkt für den Radius R, der zur Erzeugung der Krümmung der Schneidkanten (3a, 3b bzw. 4a, 4b) dient, in einer Ebene (16) parallel zur Drehachse des Schlichtmesserkopfes (14) liegt.

## Claims

1. Indexable cutting insert for a finishing cutter with surfaces (3, 4) which are selectively usable as supporting surface or as free surface, as well as with surfaces (8, 9) which are selectively usable as abutment surface or as cutting surface, and with cutting edges (3a, 3b and 4a, 4b respectively) on a base (2), whereby cutting edges (3a, 4a and 3b, 4b) respectively adjacent in peripheral direction are arranged in different planes (3' and 4' respectively), characterised in that
a) the cutting edges (3a, 3b; 4a, 4b) are curved, the radius of curvature (R) of the cutting edges (3a, 3b; 4a, 4b) being so large in relation to the cutting edge length L that the cutting edges (3a, 3b; 4a, 4b) virtually appear as straight lines;
b) that edge faces (6, 7 and 12', 13' respectively) close to the cutting edges are slightly spherical and
c) that chamfers (12) are provided, through which the ends of the cutting edges (3a, 3b and 4a, 4b) respectively terminating there are tapered.

2. Indexable cutting insert according to Claim 1, characterised in that the edge (6, 7) close to the cutting edge of the surface (8, 9) serving as abutment surface or cutting surface is arched to form the curvature of the cutting edge (3a, 3b and 41, 4b respectively).

3. Indexable cutting insert according to Claim 1, characterised in that the edge (12 or 13') close to the cutting edge of the parallel surfaces (3, 4) serving as free surface or supporting surface is slightly spherical.

4. Indexable cutting insert according to at least one of the preceding claims, characterised in that the base (2) is rectangular in plan view.

5. Indexable cutting insert according to at least one of the preceding claims, characterised in that the base (2a) is trapezoidal in plan view.

6. Indexable cutting insert according to at least one of the preceding claims, characterised in that a plane surface (8, 9) serving as abutment surface or cutting surface inside the arched edge (6, 7) serving as cutting free surface is allocated to each of the cutting edges (3a, 4a and 3b, 4b respectively).

7. Indexable cutting insert according to at least one of the preceding claims, characterised in that adjacent surfaces (8, 9) in peripheral direction serving as abutment or as cutting surfaces are staggered in layers with their crowns (11).

8. Indexable cutting insert according to at least one of the preceding claims, characterised in that two cutting edges (3a, 3b; 4a, 4b) are provided per plane (3', 4').

9. Indexable cutting insert according to at least one of the preceding claims, characterised in that respectively adjacent edges (6, 7) close to the cutting edge serving as cutting free surfaces and the corresponding surfaces (8, 9) serving as abutment or as cutting surfaces are inclined in opposite directions to the two parallel surfaces (3, 4) serving as supporting or as free surface.

10. Indexable cutting insert according to at least one of the preceding claims, characterised in that the surfaces (8, 9) have a parabola- or hyperbola-like contour (10); and that the crown (11) of the contour (10) faces the respective cutting edge (3a, 4a; 4a, 4b).

11. Cutting tool with indexable cutting inserts with the features of one of the preceding claims, characterised in that the indexable cutting inserts (1) are arranged in a finishing cutter (14) used for face milling in such as way that the cutting edges (3a, 3b and 4a, 4b respectively lie in a face (15) of the finishing cutter (14).

12. Cutting tool according to Claim 11, characterised in that the centre point for the radius R, which serves to generate the curvature of the cutting edges (3a, 3b and 4a, 4b respectively), lies in a plane (16) parallel to the rotational axis of the finishing cutter (14).

## Revendications

1. Plaquette de coupe réversible pour une tête de coupe finisseuse, comportant des surfaces (3, 4), utilisables, au choix, comme surfaces d'appui ou comme surfaces libres, ainsi que des surfaces (8, 9), utilisables, au choix, comme surfaces d'appui ou comme surfaces de coupe, et comportant des arêtes de coupe (respectivement 3a, 3b et 4a, 4b), sur un corps de base (2), chacune des arêtes de coupe voisines (respectivement 3a, 3b et 4a, 4b), se succédant sur la périphérie, étant disposée dans des plans différents (respectivement 3' et 4'),
caractériséé
a) en ce que les arêtes de coupe (3a, 3b; 4a, 4b) ont une forme d'arc, le rayon de courbure (R) des arêtes de coupe (3a, 3b; 4a, 4b) étant, par rapport à la longueur L des arêtes de coupe, assez grand pour que les arêtes de coupe (3a, 3b; 4a, 4b) apparaissent chacune comme sensiblement rectilignes
b) en ce que des surfaces des bords (respectivement 6, 7 et 12', 13'), proches des arêtes de coupe, sont bombées, et
c) en ce qu'il est prévu des facettes (12) de la face de dépouille, par lesquelles les extrémités de chacune des arêtes de coupe (respectivement 3a, 3b et 4a, 4b), sortant à cet endroit, sont biseautées.

2. Plaquette de coupe réversible suivant la revendication 1, caractérisée en ce que le bord (6, 7), proche de l'arête de coupe, de la surface (8, 9) servant de surface d'appui ou de surface de coupe, est courbe, afin de réaliser la courbure de l'arête de coupe respective (3a, 3b et 4a, 4b).

3. Plaquette de coupe réversible suivant la revendication 1, caractérisée en ce que le bord (respectivement 12 et 13'), proche de l'arête de coupe, des surfaces parallèles (3, 4) servant respectivement de surface libre ou de surface d'appui, est légèrement bombé.

4. Plaquette de coupe suivant au moins l'une des revendications précédentes, caractérisés en ce qu'en vue de dessus, le corps de base (2) est à angles droits.

5. Plaquette de coupe suivant au moins l'une des revendications précédentes, caractérisée en ce qu'en vue de dessus, le corps de base (2) a une forme trapézoïdale.

6. Plaquette de coupe suivant au moins l'une des revendications précédentes, caractérisée en ce qu'une surface plane (8, 9), servant de surface d'appui ou de surface de coupe à l'intérieur du bord (6, 7), courbe et servant de surface libre de coupe, est associée à chacune des arêtes de coupe respectives (3a, 4a et 3b, 4b).

7. Plaquette de coupe suivant au moins l'une des revendications précédentes, caractérisée en ce que des surface (8, 9), se succédant sur la périphérie et servant de surfaces d'appui ou de surfaces de coupe, ont leur sommet (11) en position décalée, l'un par rapport à l'autre.

8. Plaquette de coupe suivant au moins l'une des revendications précédentes, caractérisée en ce qu'il est prévu deux arêtes de coupe (3a, 3b; 4a, 4b) par plan (3', 4').

9. Plaquette de coupe suivant au moins l'une des revendications précédentes, caractérisée en ce que chacun des bords successifs (6, 7), proches de l'arête de coupe et servant de surfaces libres de coupe, et les surfaces associées (8, 9) servant respectivement de surfaces d'appui ou de surfaces de coupe, ont une inclinaison opposée par rapport aux deux surfaces parallèles (3, 4) servant respectivement de surfaces d'appui et de surfaces libres.

10. Plaquette de coupe suivant au moins l'uns des revendications précédentes, caractérisée en ce que les surfaces (8, 9) possèdent un contour (10) de type parabolique ou hyperbolique, et en ce que le sommet (11) du contour (10) est orienté vers chaque arête de coupe concernée (3a, 3b; 4a, 4b).

11. Outil de fraisage comportant des plaquettes de coupe réversibles ayant les caractéristiques de l'une des revendications précédentes, caractérisée en ce que les plaquette de coupe réversibles (1) sont disposées dans une tête de coupe finisseuse (14) servant au fraisage plan, de telle façon que les arêtes de coupe (respectivement 3a, 3b et 4a, 4b) soient situées dans une face frontale (15) de la tête de coupe finisseuse (14).

12. Outil de fraisage suivant la revendication 11, caractérisée en ce que le centre du rayon R, servant à réaliser la courbure des arêtes de coupe (respectivement 3a, 3b et 4a, 4b), est situé dans un plan (16), parallèle à l'axe de rotation de la tête de coupe finisseuse (14).
